# FASCICULE DE BREVET EUROPEEN

(11) **EP 4 618 274 B1**
(45) Date de publication et mention de la délivrance du brevet: **26.08.2026**
(21) Numéro de dépôt: 24305393.1
(22) Date de dépôt: 15.03.2024
(51) Int. Cl.: H01M 50/209, H01M 50/264

(54) **DISPOSITIF D'ASSEMBLAGE DE CELLULES DANS UN PACK DE BATTERIE**
VORRICHTUNG ZUM VERBINDEN VON ZELLEN IN EINEM BATTERIEPACK
DEVICE FOR ASSEMBLING CELLS IN A BATTERY PACK

(43) Date de publication de la demande: 17.09.2025
(73) Titulaire: Automotive Cells Company SE, 33520 Bruges (FR)
(72) Inventeur: DE ROLAND, Geoffroy, 33520 Bruges (FR); MATHIEU, Alexandre, 33300 Bordeaux (FR); HERON, Wilfried, 33710 Mombrier (FR); ARDRINO, Thomas, 33320 Eysines (FR)
(74) Mandataire: Alatis

(56) Documents cités:
- JP-A- 2017 168 412
- JP-B2- 6 459 511
- US-A1- 2022 263 182

## Description

### DOMAINE TECHNIQUE DE L'INVENTION

L'invention concerne, de façon générale, le domaine de la fixation et du conditionnement des cellules électrochimiques contenues dans les packs de batteries destinées au stockage de l'énergie électrique.

### ÉTAT DE LA TECHNIQUE ANTÉRIEURE

Les véhicules automobiles à traction ou à propulsion électrique ou hybride, comprennent un équipement de stockage de l'énergie électrique souvent désignés par l'expression anglaise *« battery pack »,* relié à un réseau de puissance pour alimenter un moteur électrique (de traction ou de propulsion). Un tel pack est généralement constitué d'une série de modules (généralement 12 modules) correspondant à des sous-ensembles autonomes de plusieurs cellules électrochimiques solidarisées mécaniquement et pourvus d'une interface de montage et de bornes de raccordement.

Ces modules de batterie sont regroupés dans un carter et forment alors un bloc batterie, Les cellules électrochimiques, sont, par exemple de type lithium-ion (ou Li-ion), de type Ni-Mh, ou Ni-Cd ou plomb.

Une cellule électrochimique comprend, en particulier, un empilage (dit aussi « stack ») d'électrodes positives reliées les unes aux autres et un empilage d'électrodes négatives reliées les unes aux autres et interfacées par un séparateur. Le groupement des électrodes positives reliées les unes aux autres forme une borne positive, tandis que le groupement des électrodes négatives reliées les unes aux autres forme une borne négative.

Chaque stack est logé dans une coque ou boîtier, typiquement métallique, généralement en aluminium. Une fois l'ensemble des électrodes intégrées, conditionnées et empilées dans un stack, une plaque formant couvercle de la coque est soudée à un godet (ou « CAN ») de la coque par laser ou tout autre procédé connu pour réaliser la connexion structurelle des électrodes et l'étanchéité de la cellule.

Il est connu d'assembler, en série et/ou en parallèle, une pluralité de cellules électrochimiques afin de réaliser les modules de batterie à l'aide d'un dispositif d'interconnexion assurant un contact électrique entre les bornes de deux cellules électrochimiques adjacentes ou voisines les unes des autres.

Afin d'assembler mécaniquement les cellules électrochimiques qui sont reliées électriquement, il est connu de les aligner sur un support plan ou un rail et de les maintenir par des plaques parallèles fixes venant en appui contre leurs deux extrémités pour former le module.

Un autre mode de fixation utilisé couramment consiste à visser ou à coller les cellules une par une sur une embase de support située à la partie inférieure du carter délimitant le module.

Toutefois, ce mode de fixation est problématique car il ne permet pas d'extraire les cellules du module qui les contient, indépendamment les unes des autres. Or, lors de la maintenance des batteries, il s'avère parfois nécessaire de ne remplacer que les cellules défectueuses tout en conservant les autres cellules dans le module. Cette situation est d'autant plus critique quand il s'agit de cellules de grandes dimensions.

Or, les modes de fixation traditionnels ne permettent pas de telles opérations et il en résulte un coût plus important pour l'utilisateur des batteries ou pour le propriétaire du véhicule qui peut se voir facturer le remplacement d'un module ou d'un pack complet.

En outre, le recyclage des batteries est un procédé impliquant le traitement global des modules avec toutes leurs cellules. Ce procédé est critique pour l'environnement qui se trouve alors d'autant plus impacté qu'il est nécessaire de traiter un grand nombre de cellules car les cellules qui sont toujours en état de marche ne sont généralement pas séparées et récupérées à partir des modules.

JP 6 459511 B2 et JP 2017 168412 A divulguent des dispositifs d'assemblage selon le préambule de la revendication 1.

### EXPOSE DE L'INVENTION

Dans ce contexte, l'invention a donc consisté à rechercher une solution technique destinée à surmonter les problématiques posées par la configuration actuelle des modules de batteries en modifiant et en perfectionnant le mode d'assemblage des cellules.

En particulier, l'invention propose de s'affranchir des modules pour assembler directement les cellules entre elles et, de cette manière, rendre possible l'intégration directe des cellules dans le pack de batterie de façon à ne remplacer que les cellules défaillantes sans qu'il soit nécessaire de changer un module complet.

Ce but est atteint, selon l'invention, au moyen d'un dispositif d'assemblage d'une série de cellules dans un pack, chacune desdites cellules étant pourvue d'une coque faisant partie intégrante de ladite cellule et reposant sur une embase de support disposée à la partie inférieure du pack, caractérisé en ce qu'il comprend un poussoir logé de façon coulissante dans un boîtier monté latéralement sur au moins un premier côté de l'embase et destiné à venir en contact d'appui, sous l'action d'au moins un actionneur, contre un premier plot monté à la partie inférieure de la coque de chacune desdites cellules pour déplacer ladite coque en translation sur l'embase.

Selon une caractéristique avantageuse, le dispositif de l'invention comprend une butée montée sur un second côté de l'embase opposé au premier côté et destiné à assurer la fin de course en translation et le calage de la coque de la cellule.

Selon une autre caractéristique avantageuse de l'invention, le dispositif d'assemblage comprend un second plot monté symétriquement au premier plot à la partie inférieure de la coque. De préférence, le premier plot et le second plot sont identiques et sont réalisés dans une matière électriquement isolante.

Selon une variante de réalisation, la butée est formée d'un profilé délimitant une cavité inférieure destinée à recevoir le second plot en fin de course de la coque.

Selon une variante de réalisation préférentielle, le poussoir est formé d'un corps présentant une face dorsale au contact de l'actionneur et une face inférieure biseautée prenant appui contre une face inclinée ménagée à la partie supérieure du premier plot de la coque de la cellule.

Selon encore une autre variante de réalisation, l'actionneur est formé d'au moins un boulon vissé dans un alésage taraudé du boîtier et dont l'extrémité interne est solidaire du poussoir.

Selon d'autres caractéristiques du dispositif d'assemblage de l'invention, le boîtier présente deux fentes latérales de guidage dans lesquelles se déplacent des ergots portés par les faces latérales du poussoir.

De préférence, ce boîtier est solidarisé aux bords de l'embase par des vis et comporte deux flancs latéraux qui s'appuient sur la face supérieure de l'embase en enfermant le poussoir et en encadrant la série de cellules.

Selon une autre variante de réalisation de l'invention, le poussoir est formé d'une pièce unique dimensionnée pour agir conjointement sur les premiers plots de la série de cellules.

Selon encore une autre caractéristique du dispositif de l'invention, le premier plot et le second plot sont réalisés dans une matière électriquement isolante et le poussoir est pourvu d'une interface de mousse.

Encore un autre objet de l'invention est une utilisation du dispositif d'assemblage tel que défini ci-dessus pour le conditionnement et le remplacement d'au moins une cellule extraite d'une série de cellules conditionnées dans un pack de batteries.

Le dispositif d'assemblage de l'invention permet une amélioration et une simplification du procédé de conditionnement des cellules électrochimiques à l'intérieur d'un pack de batterie dans lequel les cellules se trouvent parfaitement calées dans toutes les directions. En conséquence les connexions électriques entre les cellules sont plus stables dans le temps. En outre, le dispositif d'assemblage de l'invention offre la possibilité de démonter facilement les cellules au cours de leur cycle de vie et permet de fixer toutes les cellules longues en une seule étape.

Par suite, les opérations de maintenance de la batterie sont facilitées du fait que la manœuvre du dispositif libère les cellules et permet la préhension et l'extraction des seules cellules défectueuses sans modifier l'arrangement des autres cellules. Il résulte de cette configuration spécifique un gain économique appréciable pour l'utilisateur.

Enfin, le procédé de recyclage des batteries est allégé puisque le nombre de cellules à traiter est réduit et les contraintes environnementales se trouvent ainsi mieux et plus facilement respectées.

### BRÈVE DESCRIPTION DES FIGURES

D'autres caractéristiques et avantages de l'invention ressortiront à la lecture de la description qui va suivre, en référence aux figures annexées, pour lesquelles :
- la figure 1 est une vue partielle en perspective d'un pack de batterie comprenant une série de cellules (hors caisson) équipé d'un mode de réalisation préférentiel du dispositif d'assemblage de cellules selon l'invention ;
- la figure 2 est une vue en perspective éclatée du dispositif d'assemblage de l'invention appliqué au pack de la figure 1 ;
- la figure 3 est une vue latérale éclatée du pack des figures 1 et 2 ;
- la figure 4 est une vue de dessus éclatée du dispositif d'assemblage de l'invention appliqué au pack de la figure 1.

Pour plus de clarté, les éléments identiques ou similaires sont repérés par des signes de référence identiques dans la description et sur les figures.

### DESCRIPTION DÉTAILLÉE D'UN MODE DE RÉALISATION

Naturellement, le mode de réalisation du dispositif d'assemblage de l'invention illustré schématiquement par les figures présentées ci-dessus et décrites ci-après, n'est donné qu'à titre d'exemple non limitatif. Il est explicitement prévu dans le cadre de l'invention que l'on puisse proposer et combiner entre eux différents modes pour en proposer d'autres.

L'invention concerne les blocs ou packs de batterie destinés au stockage de l'énergie électrique et s'intéresse plus particulièrement à l'assemblage de la série de cellules électrochimiques à l'intérieur d'un carter ou caisson (non représenté) dont les parois délimitent le pack.

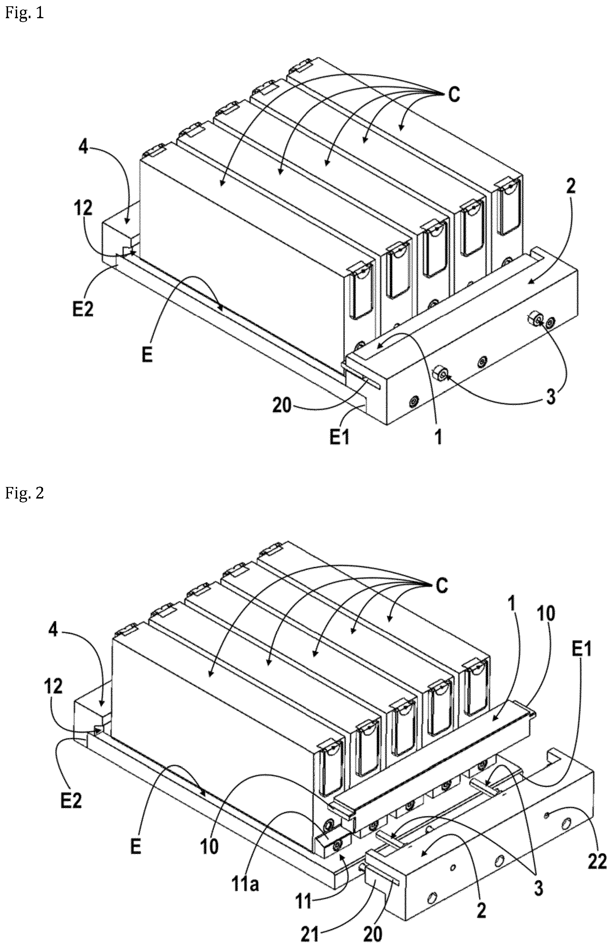

Généralement et comme illustré par la figure 1, chacune de ces cellules est pourvue d'une coque C qui fait partie intégrante de la cellule et qui repose sur une embase de support E disposée à la partie inférieure du caisson. Les cellules sont juxtaposées et, le cas échéant, toutes les cellules d'un même pack sont électriquement connectées entre elles (en série ou en parallèle).

La problématique principale que l'invention vise à résoudre tient au fait que, dans les modules de batterie traditionnels, il n'est pas possible de séparer sélectivement les cellules de la série pour en extraire les seules cellules défectueuses.

Cet obstacle est lié à l'absence de moyens d'assemblage mobiles car les cellules sont habituellement assemblées en étant vissées ou collées ou bien encore via des éléments soudés sur l'embase E de support afin d'éviter, au cours du temps, des décalages préjudiciables à la stabilité du pack et à la fiabilité des connexions électriques.

Toutefois, il s'avère pourtant utile dans certaines situations, tant pour des raisons de coût que d'ergonomie, de pouvoir extraire sélectivement les cellules du module afin de ne remplacer que les cellules défectueuses.

Afin d'atteindre cet objectif, l'invention consiste à proposer un dispositif d'assemblage des cellules permettant la dissociation et le retrait sélectif des cellules en fonction des besoins de maintenance en s'affranchissant de la structure d'un module. Ce dispositif, dont un mode de réalisation préférentiel est représenté sur les figures 1 à 4, comprend un poussoir 1 logé de façon coulissante dans un boîtier 2 monté latéralement sur au moins un premier côté **E1** de l'embase **E.**

Ce poussoir 1 est destiné à assurer le déplacement des cellules à coques C sur l'embase E sous l'action d'au moins un actionneur et, dans le mode de réalisation représenté ici, de deux actionneurs 3. Dans le mode de réalisation de l'invention représenté ici sur les figures, les actionneurs 3 sont formés de deux boulons vissés dans des alésages taraudés 22 du boîtier 2 et dont l'extrémité interne est solidaire du poussoir **1.**

La partie inférieure des coques C, et plus particulièrement, du couvercle fermant latéralement la coque de chacune des cellules, porte un premier plot **11** en contact avec le poussoir **1.** Ainsi, par activation manuelle (ou automatisée) des actionneurs 3, le poussoir 1 se déplace longitudinalement et parallèlement au plan de l'embase E en provoquant la translation coulissante des coques C sur l'embase **E.**

Ce mouvement des cellules se poursuit jusqu'à ce que les coques C viennent, en fin de course, en contact avec une butée 4 montée sur un second côté **E2** de l'embase E opposé au premier côté **E1.** Dans le mode de réalisation illustré par les figures 1 à 4, le dispositif d'assemblage de l'invention comprend ici un second plot **12** monté symétriquement au premier plot **11** à la partie inférieure de chacune des coques C.

De préférence, le premier plot **11** et le second plot **12** sont identiques et sont réalisés dans une matière électriquement isolante. La butée 4 est, quant à elle, formée d'un profilé délimitant une cavité inférieure **40** destinée à recevoir le second plot **12** en fin de course de la coque C. Le cas échéant, le poussoir 1 est pourvu d'une interface de mousse (non représentée) afin d'assurer un ajustement précis aux premiers plots **11** pour tenir compte des tolérances de fabrication des différentes pièces.

Le poussoir 1 est formé d'un corps présentant une face dorsale **1b** au contact de l'actionneur 3 et une face inférieure **1a** biseautée prenant appui contre une face inclinée **11a** ménagée en regard à la partie supérieure du premier plot **11** du couvercle de la coque **C.** Conjointement, la paroi de la cavité inférieure **40** de la butée 4 a un profil biseauté complémentaire de la face supérieure inclinée **12a** du second plot **12.** Cette double coopération assure un calage vertical ainsi qu'un calage horizontal des cellules selon leur axe de déplacement du fait que les faces supérieures **11a, 12a** des plots **11, 12** sont toujours bloquées vers le haut.

Afin de faciliter le déplacement du poussoir **1,** le boîtier 2 présente deux fentes latérales **20** de guidage dans lesquelles se déplacent des ergots ou des nervures **10** portés par les faces latérales du poussoir **1.**

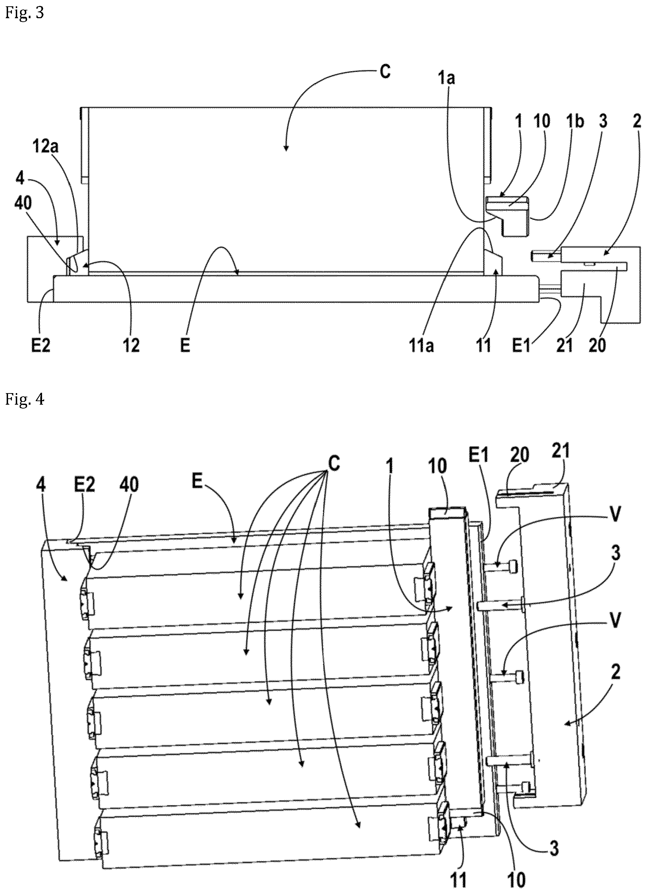

De préférence, le boîtier 2 est solidarisé aux bords de l'embase E par des vis V (figure 4) et comporte deux flancs latéraux **21** qui s'appuient sur la face supérieure de l'embase en enfermant le poussoir **1,** comme illustré par la figure 1. Éventuellement, les liaisons entre l'embase E et, respectivement, le boîtier 2 et la butée 4 sont renforcées par collage ou soudure.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

Dans le mode de réalisation de l'invention représenté ici sur les figures, le corps du poussoir 1 est formé d'une pièce unique dimensionnée pour agir conjointement sur tous les premiers plots **11** de la série de cellules. Toutefois, il serait possible, sans sortir du cadre de l'invention, de réaliser le poussoir sous forme de pièces distinctes dont chacune serait associée à un plot de cellule. Dans ce cas, le dispositif d'assemblage de l'invention comprendrait autant d'actionneurs que de poussoirs.

Il est souligné que toutes les caractéristiques, telles qu'elles se dégagent pour un homme du métier à partir de la présente description, des dessins et des revendications attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que des circonstances techniques rendent de telles combinaisons impossibles ou dénuées de sens.

## Revendications

1. Dispositif d'assemblage d'une série de cellules dans un pack de batteries, chacune desdites cellules étant pourvue d'une coque (C) faisant partie intégrante de ladite cellule et reposant sur une embase (E) de support disposée à la partie inférieure du pack, le dispositif comprenant un poussoir (1) logé de façon coulissante dans un boîtier (2) monté latéralement sur au moins un premier côté (E1) de l'embase, **caractérisé en ce que** le poussoir est destiné à venir en contact d'appui, sous l'action d'au moins un actionneur (3), contre un premier plot (11) monté à la partie inférieure de la coque de chacune desdites cellules pour déplacer ladite coque en translation sur l'embase.

2. Dispositif selon la revendication 1, **caractérisé en ce qu'**il comprend une butée (4) montée sur un second côté (E2) de l'embase (E) opposé au premier côté (E1) et destiné à assurer la fin de course en translation et le calage de la coque (C) de la cellule.

3. Dispositif selon l'une des revendications précédentes, **caractérisé en ce qu'**un second plot (12) est monté symétriquement au premier plot (11) à la partie inférieure de la coque (C).

4. Dispositif selon la revendication précédente, **caractérisé en ce que** le premier plot (11) et le second plot (12) sont identiques et sont réalisés dans une matière électriquement isolante.

5. Dispositif selon les revendications 2 à 4, **caractérisé en ce que** ladite butée (4) est formée d'un profilé délimitant une cavité inférieure (40) destinée à recevoir le second plot (12) en fin de course de la coque.

6. Dispositif selon l'une des revendications précédentes, **caractérisé en ce que** ledit poussoir (1) est formé d'un corps présentant une face dorsale (1b) au contact dudit actionneur (3) et une face inférieure (1a) biseautée prenant appui contre une face inclinée (11a) ménagée à la partie supérieure du premier plot (11) de la coque de la cellule.

7. Dispositif selon l'une des revendications précédentes, **caractérisé en ce que** ledit actionneur (3) est formé d'au moins un boulon vissé dans un alésage taraudé (22) du boîtier (2) et dont l'extrémité interne est configurée pour être solidaire du poussoir (1).

8. Dispositif selon l'une des revendications précédentes, **caractérisé en ce que** ledit boîtier (2) présente deux fentes latérales (20) de guidage dans lesquelles se déplacent des ergots (10) portés par les faces latérales du poussoir (1).

9. Dispositif selon l'une des revendications précédentes, **caractérisé en ce que** le boîtier (2) est solidarisé aux bords de l'embase (E) par des vis.

10. Dispositif selon la revendication précédente, **caractérisé en ce que** le boîtier (2) comporte deux flancs latéraux (21) qui s'appuient sur la face supérieure de l'embase (E) en enfermant le poussoir (1).

11. Dispositif selon l'une des revendications précédentes, **caractérisé en ce que** ledit poussoir (1) est formé d'une pièce unique dimensionnée pour agir conjointement sur les premiers plots (11) de la série de cellules.

12. Dispositif selon l'une des revendications précédentes, **caractérisé en ce que** le poussoir (1) est pourvu d'une interface de mousse.

13. Utilisation du dispositif d'assemblage selon l'une des revendications 1 à 12 pour le conditionnement et le remplacement d'au moins une cellule extraite d'une série de cellules conditionnées dans un pack de batteries.

## Patentansprüche

1. Vorrichtung zum Zusammenbauen einer Reihe von Zellen in einem Batteriepack, wobei jede der Zellen mit einer Gehäuseschale (C) versehen ist, die einen aufnehmenden Bestandteil der Zelle bildet und auf einem tragenden Sockel (E) ruht, der an dem unteren Teil des Packs angeordnet ist, wobei die Vorrichtung einen Schieber (1) umfasst, der verschiebbar in einem seitlich auf mindestens einer ersten Seite (E1) des Sockels montierten Gehäuse (2) aufgenommen ist,
**dadurch gekennzeichnet, dass** der Schieber dazu bestimmt ist, unter der Einwirkung mindestens eines Aktuators (3) in Anlagekontakt mit einem ersten Zapfen (11), der an dem unteren Teil der Gehäuseschale jeder der Zellen angebracht ist, zu kommen, um die Gehäuseschale translatorisch auf dem Sockel zu verschieben.

2. Vorrichtung nach Anspruch 1, **dadurch gekennzeichnet, dass** sie einen Anschlag (4) umfasst, der auf einer der ersten Seite (E1) gegenüberliegenden zweiten Seite (E2) des Sockels (E) angebracht ist und dazu bestimmt ist, das Ende des Translationswegs und die Arretierung der Gehäuseschale (C) der Zelle sicherzustellen.

3. Vorrichtung nach einem der vorstehenden Ansprüche,
**dadurch gekennzeichnet, dass** ein zweiter Zapfen (12) symmetrisch zu dem ersten Zapfen (11) an dem unteren Teil der Gehäuseschale (C) angebracht ist.

4. Vorrichtung nach dem vorstehenden Anspruch,
**dadurch gekennzeichnet, dass** der erste Zapfen (11) und der zweite Zapfen (12) gleich sind und aus einem elektrisch isolierenden Material hergestellt sind.

5. Vorrichtung nach den Ansprüchen 2 bis 4,
**dadurch gekennzeichnet, dass** der Anschlag (4) aus einem Profil gebildet ist, das einen unteren Hohlraum (40) begrenzt, der dazu bestimmt ist, den zweiten Zapfen (12) an der Endstellung der Gehäuseschale aufzunehmen.

6. Vorrichtung nach einem der vorstehenden Ansprüche,
**dadurch gekennzeichnet, dass** der Schieber (1) aus einem Körper gebildet ist, der eine Rückseite (1b) in Kontakt mit dem Aktuator (3) und eine abgeschrägte Unterseite (1a), die sich gegen eine geneigte Fläche (11a) abstützt, die an dem oberen Teil des ersten Zapfens (11) der Zellen Gehäuseschale ausgebildet ist, aufweist.

7. Vorrichtung nach einem der vorstehenden Ansprüche,
**dadurch gekennzeichnet, dass** der Aktuator (3) aus mindestens einem Bolzen gebildet ist, der in eine Gewindebohrung (22) des Gehäuses (2) eingeschraubt ist und dessen inneres Ende konfiguriert ist, um fest mit dem Schieber (1) verbunden zu sein.

8. Vorrichtung nach einem der vorstehenden Ansprüche,
**dadurch gekennzeichnet, dass** das Gehäuse (2) zwei seitliche Führungsschlitze (20) aufweist, in denen sich Stifte (10) bewegen, die von den Seitenflächen des Schiebers (1) getragen werden.

9. Vorrichtung nach einem der vorstehenden Ansprüche,
**dadurch gekennzeichnet, dass** das Gehäuse (2) an den Rändern des Sockels (E) durch Schrauben befestigt ist.

10. Vorrichtung nach dem vorstehenden Anspruch,
**dadurch gekennzeichnet, dass** das Gehäuse (2) zwei Seitenflanken (21) aufweist, die auf der oberen Oberfläche des Sockels (E) aufliegen und den Schieber (1) umschließen.

11. Vorrichtung nach einem der vorstehenden Ansprüche,
**dadurch gekennzeichnet, dass** der Schieber (1) aus einem einzigen Teil gebildet ist, das so bemessen ist, dass es auf die ersten Zapfen (11) der Reihe von Zellen gemeinsam einwirkt.

12. Vorrichtung nach einem der vorstehenden Ansprüche,
**dadurch gekennzeichnet, dass** der Schieber (1) mit einer Schaumstoffoberfläche versehen ist.

13. Verwendung der Vorrichtung zum Zusammenbauen nach einem der Ansprüche 1 bis 12 für die Konfektionierung und den Austausch mindestens einer Zelle, die aus einer Reihe von in einem Batteriepack konfektionierten Zellen entnommen wird.

## Claims

1. A device for assembling a series of cells in a battery pack, each of said cells being provided with a casing (C) forming an integral part of said cell and resting on a support base (E) arranged at the lower part of the pack, the device comprising a pusher (1) slidably housed in a housing (2) mounted laterally on at least a first side (E1) of the base, **characterized in that** the pusher is intended to come into bearing contact, under the action of at least one actuator (3), against a first stud (11) mounted at the lower part of the casing of each of said cells to translate said casing along the base.

2. The device according to claim 1, **characterized in that it** comprises a stop (4) mounted on a second side (E2) of the base (E) opposite the first side (E1) and intended to ensure the end of the translational travel and the locking of the casing (C) of the cell.

3. The device according to either of the preceding claims,
**characterized in that** a second stud (12) is mounted symmetrically with respect to the first stud (11) at the lower part of the casing (C).

4. The device according to the preceding claim, **characterized in that** the first stud (11) and the second stud (12) are identical and are made of an electrically insulating material.

5. The device according to claims 2 to 4, **characterized in that** said stop (4) is formed from a profile delimiting a lower cavity (40) intended to receive the second stud (12) at the end of travel of the casing.

6. The device according to any one of the preceding claims,
**characterized in that** said pusher (1) is formed from a body having a rear face (1b) in contact with said actuator (3) and a beveled lower face (1a) bearing against an inclined face (11a) arranged at the upper part of the first stud (11) of the casing of the cell.

7. The device according to any one of the preceding claims,
**characterized in that** said actuator (3) is formed from at least one bolt screwed into a threaded bore (22) in the housing (2) and of which the inner end is configured to be integral with the pusher (1).

8. The device according to any one of the preceding claims,
**characterized in that** said housing (2) has two side guide slots (20) in which lugs (10) carried by the side faces of the pusher (1) move.

9. The device according to any one of the preceding claims,
**characterized in that** the housing (2) is secured to the edges of the base (E) by screws.

10. The device according to the preceding claim, **characterized in that** the housing (2) comprises two side walls (21) that rest on the upper face of the base (E) while enclosing the pusher (1).

11. The device according to any one of the preceding claims,
**characterized in that** said pusher (1) is formed from a single piece dimensioned to act together on the first studs (11) of the series of cells.

12. The device according to any one of the preceding claims,
**characterized in that** the pusher (1) is provided with a foam interface.

13. The use of the assembly device according to any one of claims 1 to 12 for packaging and replacing at least one cell removed from a series of cells packaged in a battery pack.
